# EUROPÄISCHE PATENTSCHRIFT

(11) **EP 0 760 439 B1**
(45) Veröffentlichungstag und Bekanntmachung des Hinweises auf die Patenterteilung: **23.02.2000**
(21) Anmeldenummer: 96112983.0
(22) Anmeldetag: 13.08.1996
(51) Int. Cl.: F16G 3/16, F16G 3/02

(54) **Vorrichtung zum Befestigen eines Verbindungselementes am Gurtende eines Förderbandes**
Device for applying a fastener to the end of a conveyor belt
Dispositif de fixation d'un élément de liaison à l'extrémité d'une bande transporteuse

(30) Priorität: 27.08.1995 DE 19531433
(43) Veröffentlichungstag der Anmeldung: 05.03.1997
(73) Patentinhaber: MATO Maschinen- und Metallwarenfabrik Curt Matthaei GmbH & Co KG, D-63071 Offenbach (DE)
(72) Erfinder: Herold, Wolfgang, 63075 Offenbach (Main) (DE)
(74) Vertreter: Quermann, Helmut, Dipl.-Ing.

(56) Entgegenhaltungen:
- EP-A- 0 628 747
- DE-A- 3 219 110
- DE-A- 4 343 384

## Beschreibung

Die Erfindung betrifft eine Vorrichtung zum Befestigen eines insbesondere U-förmigen Verbindungselementes am Gurtende eines Förderbandes mittels eines stiftförmigen Befestigungselementes, das Durchtrittsöffnungen im Bereich der Schenkelenden des Verbindungselementes und das Förderband durchsetzt, mit einem Unterwerkzeug und einem Oberwerkzeug, die zum Klemmen des Gurtendes zwischen den Schenkeln des Verbindungselementes aufeinander zu bewegbar, sowie voneinander weg bewegbar sind, mit einem im Unterwerkzeug verschiebbar gelagerten Dorn zum Durchschieben des Befestigungselementes durch die Durchtrittsöffnungen im Verbindungselement und durch das Förderband, sowie einem im Oberwerkzeug angeordneten Dorn, dessen dem Befestigungselement zugewandtes Ende mit einer Kontur zum Ausformen des durch das Verbindungselement geschobenen Befestigungselementendes versehen ist.

Eine derartige Vorrichtung mit den Merkmalen des Oberbegriffes des Patentanspruches 1 ist aus der EP 628 747 A1 bekannt. Dort wird das stiftförmige Befestigungselement mit seinem stumpfen Ende voran durch das Gurtende gedrückt und dann das stumpfe, vorlaufende Ende und gegebenenfalls auch das zweite, stumpfe Ende, durch Druck und Verformung verstemmt bzw. verankert. Hierzu sind die Enden der Dorne spitz ausgebildet, womit diese entsprechende Vertiefungen in den Stirnflächen des Befestigungselementes bilden.

Insbesondere dann, wenn das vorlaufende Ende des Befestigungselementes manuell verstemmt wird, läßt sich eine sichere Verbindung von Befestigungsmittel und Verbindungselement herstellen. Das Befestigungselement kann mit relativ geringer Kraft, somit ohne daß ein Knicken des Befestigungselementes beim Durchschieben durch die Durchtrittsöffnungen im Verbindungselement und das Förderband zu befürchten ist, durchgeschoben werden und es erfolgt das großflächige Verstemmen des vorlaufenden Endes unabhängig hiervon mit der erforderlichen hohen Kraft, um die gewünschte Verformung des Befestigungselementes in diesem Endbereich zu erzielen. Das andere Ende des Befestigungselementes ist in aller Regel ausreichend verformt, nachdem über dieses die Kräfte unmittelbar durch den im Unterwerkzeug verschiebbar gelagerten Dorn eingeleitet werden.

Aus der DE 43 43 384 A1 ist eine Vorrichtung zum Befestigen eines U-förmigen Verbindungselementes am Gurtende eines Förderbandes mittels eines stiftförmigen Befestigungselementes bekannt. In der DE 32 19 110 A1 ist eine Vorrichtung zum Befestigen eines Verbindungselementes am Gurtende eines Förderbandes beschrieben, bei der krampenförmige Befestigungselemente verwendet werden. Zwei Preßbacken vollführen eine Vorverformung des Krampen, während die eigentliche, die Funktionsfähigkeit der Verbindung herbeiführende Endverformung mittels einer Platte erfolgt.

Es ist Aufgabe der vorliegenden Erfindung, eine Vorrichtung der eingangs genannten Art so weiter zu bilden, daß aufgrund einer großen Verformung des in Eintreibrichtung vorlaufenden Befestigungselementes eine besonders sichere Verbindung von Befestigungsmittel und Verbindungselement sichergestellt ist. Es ist insbesondere daran gedacht, daß die Verformung maschinell erfolgt, wobei sich die Vorrichtung durch eine baulich einfache Gestaltung auszeichnen soll.

Gelöst wird die Aufgabe bei einer Vorrichtung der eingangs genannten Art dadurch, daß eine Druckleiste vorgesehen ist, die nach dem Ausformen der Kontur des Befestigungselementendes in Anlage mit dem Oberwerkzeug und dem ausgeformten Ende des Befestigungselementes bringbar ist. Erfindungsgemäß ist damit vorgesehen, daß eine Nachverformung des bereits durch den im Oberwerkzeug angeordneten Dorn vorverformten vorlaufenden Endes des Verbindungselementes mittels der Druckleiste erfolgt. So ist die Ausformkontur des interessierenden Dornes beispielsweise als Konus oder Ringschneide ausgebildet, die im Bereich des vorlaufenden Endes des Befestigungselementes eine komplementäre Oberflächengestaltung bewirkt. Diese wird durch die Druckleiste geglättet, die zwischen dem Oberwerkzeug und dem ausgeformten Ende des Befestigungselementes eingeklemmt wird. Hierzu ist es nur erforderlich, nach dem Vorverformen des Befestigungselementes das Ober- und Unterwerkzeug voneinander weg zu bewegen, die Druckleiste in den zwischen dem Oberwerkzeug und dem ausgeformten Ende des Befestigungselementes gebildeten Spalt einzubringen und den Spalt durch relatives Verfahren von Ober- und Unterwerkzeug zu schließen. Verfahren wird die Druckleiste bevorzugt mittels eines Pneumatikzylinders.

Die Erfindung ist nicht darauf beschränkt, daß das stiftförmige Befestigungselement stumpfe Enden aufweist. Es ist insbesondere denkbar, daß das vorlaufende Ende des Verbindungselementes auch mit einer beispielsweise konischen Ausnehmung versehen ist, die damit geeignet ist, in Art einer Schneide das Förderband zu durchdringen. Das nachlaufende Ende des Befestigungselementes kann beispielsweise als Nietkopf ausgebildet sein, womit nur das vorlaufende Ende des Befestigungselementes verformt werden muß, um eine sichere Verbindung von Befestigungsmittel und Verbindungselement zu erreichen.

Zum vollständigen Ausformen des vorlaufenden Endes des Befestigungselementes reicht es völlig aus, wenn die zur Anlage mit dem ausgeformten Ende des Befestigungselementes gelangende Druckleistenfläche eben ausgebildet ist. Beim Zusammenfahren von Ober- und Unterwerkzeug verpreßt damit die ebene Druckleistenfläche das vorverformte Ende des Befestigungselementes und bewirkt, daß das in diesem Bereich befindliche Material radial nach außen und zusätzlich dort gegen das Verbindungselement gedrückt wird.

Eine baulich besonders einfache Gestaltung der Vorrichtung läßt sich erzielen, wenn das Oberwerkzeug stationär ist. Es wird damit nur, abgesehen von der Druckleiste, das Unterwerkzeug verfahren. Zweckmäßig ist das Unterwerkzeug horizontal zum Oberwerkzeug verschiebbar, sowie die Druckleiste vertikal zum Oberwerkzeug. Es kann damit auf besonders einfache Art und Weise das Verbindungselement und das Gurtende des Förderbandes von oben in die Vorrichtung eingeführt werden. Um eine sichere Positionierung des Verbindungselementes und des Befestigungselementes zu erreichen, sollte das Unterwerkzeug der Aufnahme des Verbindungselementes und des Befestigungselementes dienen. Mehrere Verbindungselemente sind zweckmäßig über einen Fixierstab miteinander verbunden und es ist das jeweilige Befestigungselement in die, auf die Durchschieberichtung bezogen, nachlaufende Durchtrittsöffnung bereits eingesteckt. Die Positionierung des Gurtendes zum Befestigen mit dem Verbindungselement kann weiter optimiert werden, wenn das Unterwerkzeug einen Anschlag zum Anlegen der Stirnfläche des Gurtendes aufweist.

Wesentliche, die vorliegende Erfindung weiterbildende Elemente beziehen sich auf das Schließen des Verbindungselementes und das Durchschieben des Befestigungselementes durch die Durchtrittsöffnungen im Verbindungselement und das Förderband. So ist vorgesehen, daß der Dorn des Unterwerkzeuges mittels eines relativ zum Unterwerkzeug bewegbaren Verschiebeteils verschiebbar ist, wobei zwischen dem Verschiebeteil und dem Unterwerkzeug ein Kraftmittel wirksam ist. Der das Befestigungselement verschiebende Dorn wird damit nicht unmittelbar durch ein Kraftmittel verschoben, das zwischen dem Rahmen der Vorrichtung und dem Dorn, sondern zwischen einem separaten Verschiebeteil und dem Dorn angeordnet ist. Zum Verschieben des Verschiebeteiles relativ zum Rahmen ist ein weiteres Kraftmittel vorgesehen, das zwischen dem Rahmen und dem Verschiebeteil wirksam ist. Das mit dem Unterwerkzeug zusammenwirkende Kraftmittel hat die Aufgabe, die Schließbewegung des Verbindungselementes zum Einklemmen des Gurtendes zwischen den beiden Schenkeln des Verbindungselementes herbeizuführen, bevor infolge der Verschiebebewegung des Verschiebeteils, die durch das weitere Kraftmittel bewirkt wird, der im Unterwerkzeug verschiebbar gelagerte Dorn mittels des Verschiebeteils beaufschlagt wird und das stiftförmige Befestigungselement durch das Verbindungselement und das Förderband schiebt. Grundsätzlich würde es dabei ausreichen, wenn das zwischen dem Verschiebeteil und dem Unterwerkzeug angeordnete Kraftmittel als Feder ausgebildet ist, die so stark ist, daß sie beim Zusammenbiegen der Schenkel des Verbindungselementes einen Abstand von Verschiebeteil und Unterwerkzeug aufrechterhält, womit der im Unterwerkzeug verschiebbar gelagerte Dorn vom Verschiebeteil nicht kontaktiert und damit auch nicht verschoben wird. Erst dann, wenn das weitere Kraftmittel den Druck auf das Verschiebeteil erhöht, wird die Federkraft überschritten und der Dorn verschoben. Eine bevorzugte Weiterbildung sieht allerdings vor, daß sowohl das mit dem Unterwerkzeug zusammenwirkende Kraftmittel als auch das mit dem Rahmen zusammenwirkende Kraftmittels als Hydraulikzylinder ausgebildet sind. Der Vorteil der Ausbildung des mit dem Unterwerkzeug zusammenwirkenden Kraftmittel als Hydraulikyzlinder ist darin zu sehen, daß die von diesem ausgeübte Kraft, nachdem sie aufgebaut ist, konstant ist, insbesondere dann, wenn im Steuerkreislauf dieses Hydraulikzylinders eine Druckbegrenzungseinrichtung angeordnet ist. In diesem Zusammenhang sieht eine vorteilhafte Weiterbildung vor, daß das mit dem Unterwerkzeug zusammenwirkende Kraftmittel als einseitig beaufschlagbarer Hydraulikzylinder ausgebildet ist, dessen Kolbenstange sich am Unterwerkzeug abstützt, sowie das mit dem Rahmen zusammenwirkende Kraftmittel als im Rahmen angeordneter, beidseitig beaufschlagbarer Hydraulikzylinder ausgebildet ist, dessen Kolbenstange mit dem Verschiebeteil verbunden ist, wobei der eine relativ große Kolbenfläche aufweisende zylinderseitige Druckraum des mit dem Rahmen verbundenen Kraftmittels über eine Druckleitung mit dem eine relativ kleine Kolbenfläche aufweisenden zylinderseitigen Druckraum des mit dem Unterwerkzeug zusammenwirkenden Kraftmittels verbunden ist. Ein Teil des Rücklaufes des eine große Kraft aufbringenden, mit dem Rahmen zusammenwirkenden Hydraulikzylinders bildet damit den Antrieb des eine wesentlich kleinere Kraft aufbringenden, mit dem Unterwerkzeug zusammenwirkenden Hydraulikzylinders.

Um das Ober- und Unterwerkzeug in ihre Ausgangsposition auseinanderschieben zu können, ist vorteilhaft zwischen diesen eine Feder angeordnet. Auch sollte die Kolbenstange des mit dem Unterwerkzeug zusammenwirkenden Kraftmittels sich entgegen der Kraft einer Feder am Unterwerkzeug abstützen, so daß die Kraft zum Einfahren dieser Kolbenstange nicht alleine über die Feder zwischen dem Ober- und Unterrahmen aufgebracht werden muß.

Entsprechend der erfindungsgemäßen Druckleiste ist es selbstverständlich auch möglich, eine weitere, verfahrbare Druckleiste vorzusehen, die nach dem Ausformen der Kontur des in Einschubrichtung nachlaufenden Endes des Befestigungselementes dieses glättet. Für diesen Fall, aber auch generell, kann vorgesehen sein, daß auch der im Unterwerkzeug verschieblich gelagerte Dorn im Bereich seines dem Befestigungselement zugewandten Endes mit einer Kontur zum Ausformen des Befestigungselementes versehen ist.

Gemäß einer besonderen Ausführungsform der Erfindung ist ein Niederhalter zum Andrücken des Gurtendes an das Unterwerkzeug vorgesehen. Der Niederhalter sollte dabei während des gesamten Befestigungsvorganges des Verbindungselementes am Gurtende des Förderbandes das Gurtende an das Unterwerkzeug andrücken. Der Niederhalter folgt damit während der Arbeitsfolge der Vorrichtung dem sich hin- und herbewegenden Unterwerkzeug. Durch die dauerhafte Fixierung des Gurtendes und damit der Verbindungselemente am Unterrahmen ist ein schnelles Arbeiten bei hohen Stückzahlen möglich. Bevorzugt ist der Niederhalter im stationären Rahmen gelagert und weist einen relativ zu diesem verfahrbaren Stößel auf. Grundsätzlich besteht auch die Möglichkeit, den Niederhalter im stationären, allerdings austauschbaren Oberrahmen zu lagern. Gemäß einer besonderen Gestaltung weist der Niederhalter einen Pneumatikzylinder auf. Ohne daß es einer Regeleinheit bedarf, wird der unter Druck stehende ausgefahrene Stößel bei einer Bewegung des Unterwerkzeuges in Richtung des Oberwerkzeuges aufgrund der auf das Unterwerkzeug einwirkenden Kraftmittel automatisch entsprechend der Verfahrbewegung des Unterwerkzeuges eingefahren und dabei die im Pneumatikzylinder befindliche Druckluft ins Druckluftnetz zurückgeschoben; andererseits beim Bewegen des Unterwerkzeuges vom Oberwerkzeug weg der Stößel wieder automatisch ausgefahren. Statt eines Druckluftzylinders kann durchaus auch ein Hydraulikzylinder verwendet werden, wobei eine Regeleinheit diesen im vorbeschriebenen Sinne ansteuert bzw. regelt. Mit der Kolbenstange des Pneumatik- bzw. Hydraulikzylinders ist zweckmäßig der Stößel verbunden, und es weist ferner das Unterwerkzeug eine Anschlagplatte auf, zwischen der und dem Stößel das Gurtende geklemmt wird.

Die Erfindung schlägt damit eine Vorrichtung zum Befestigen eines insbesondere U-förmigen Verbindungselementes am Gurtende eines Förderbandes vor, das wie folgt arbeitet:
- Anordnen des Gurtendes zwischen auseinandergebogenen Schenkeln des Verbindungselementes,
- Zusammenbiegen der Schenkel des Verbindungselementes zur Anlage der Schenkel am Gurtende,
- Durchschieben des Befestigungselementes durch miteinander fluchtende Durchtrittsöffnungen in den Schenkeln des Verbindungselementes und durch das Gurtende,
- Verformen des durch das Verbindungselement durchgeschobenen, vorderen Befestigungselementendes,
- Glätten des verformten Befestigungselementendes,
wobei gemäß einer bevorzugten Ausgestaltung der Erfindung das Gurtende während des Befestigungsvorganges gegen das bewegliche Unterwerkzeug gedrückt wird, insbesondere mittels eines Niederhalters, der zwischen sich und dem Unterwerkzeug das Gurtende klemmt.

Weitere Merkmale der Erfindung sind in der Beschreibung der Figuren sowie den Figuren selbst dargestellt, wobei bemerkt wird, daß alle Einzelmerkmale und alle Kombinationen von Einzelmerkmalen erfindungswesentlich sind.

In den Figuren ist die Erfindung vereinfacht anhand einer Ausführungsform beispielsweise dargestellt, ohne hierauf beschränkt zu sein. Es stellt dar:
- Figur 1: eine Draufsicht auf ein Förderband mit mehreren mit einem Gurtende verbundenen Verbindungselementen,
- Figur 2: einen Schnitt gemäß der Linie I-I in Figur 1,
- Figur 3: die zur Bildung der Gurtverbindung dienende erfindungsgemäße Vorrichtung, in schematischer Darstellung, verdeutlicht für deren Ausgangsstellung,
- Figuren 4 bis 7: die in Figur 3 gezeigte Vorrichtung für deren folgende Arbeitsstellungen.

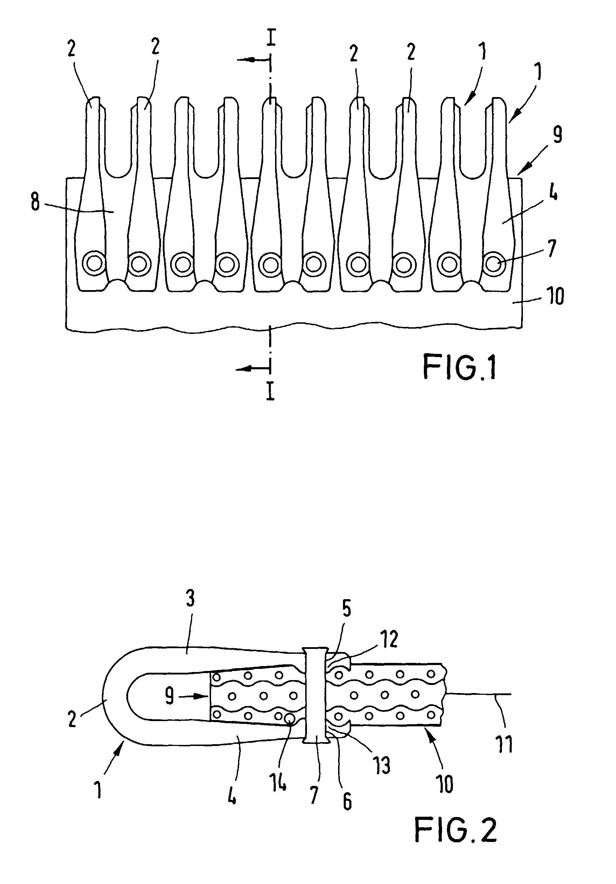

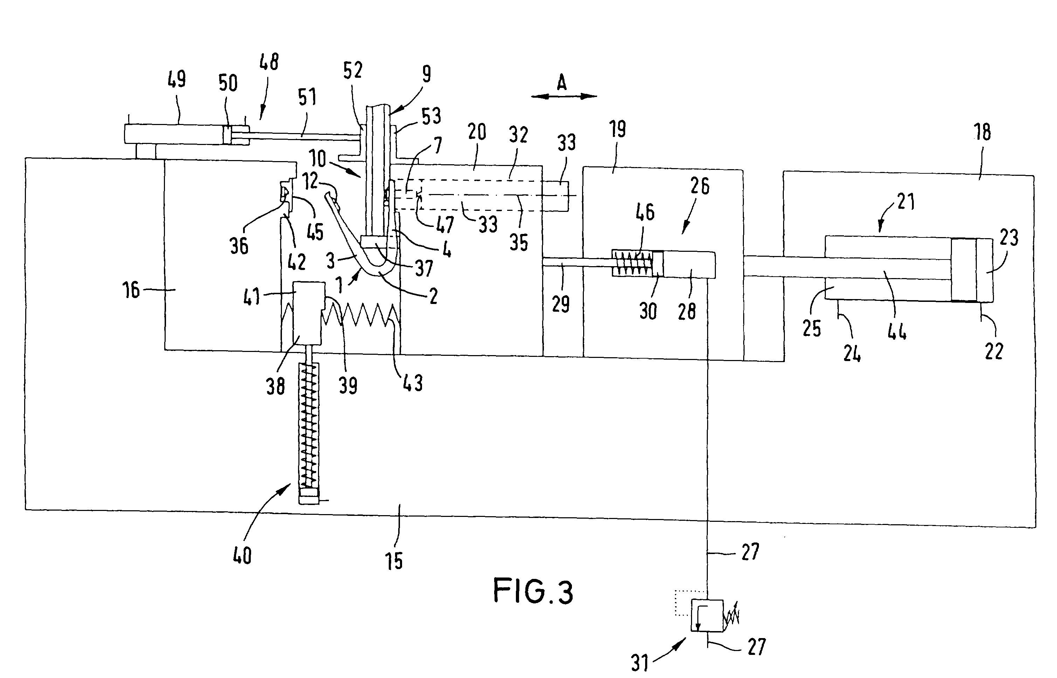

Die in den Figuren 3 bis 7 näher veranschaulichte Vorrichtung dient dem Befestigen mindestens eines Verbindungselementes, bevorzugt mehrerer Verbindungselemente am Gurtende eines Förderbandes. Die am Gurtende des Förderbandes befestigten Verbindungselemente sind in der Darstellung der Figuren 1 und 2 gezeigt. Das jeweilige Verbindungselement 1 ist U-förmig ausgebildet und weist eine etwa halbkreisförmige Kupplungsöse 2 und zwei Halteschenkel 3 und 4 auf. Diese sind im Bereich ihrer Enden mit Durchtrittsöffnungen 5 und 6 für ein stiftförmiges Befestigungselement 7 versehen. Jeweils zwei Verbindungselemente 1 bilden eine Baueinheit, indem sie in den den Durchtrittsöffnungen 5 und 6 zugewandten Hälften der Halteschenkel 3 und 4 mittels eines gegenüber der Außenfläche des jeweiligen Halteschenkels 3 bzw. 4 vertieften Verbindungssteges 8 verbunden sind. Im Bereich der Verbindungsstege 8 umschließt das jeweilige Verbindungselement 1 das Gurtende 9 des Förderbandes 10. Die Mittelebene des Gurtendes 9 ist mit der Bezugsziffer 11 bezeichnet. Die Halteschenkel 3 und 4 sind auf ihrer dem Förderband 10 zugewandten Seite im Bereich der Durchtrittsöffnungen 5 und 6 mit diese konisch umgebenden Ringwülsten 12 bzw. 13 versehen, die sich in das Förderband 10 eindrücken. Vor dem Anbringen des Befestigungselementes 1 ist das U-förmige Befestigungselement 1 aufgespreizt und es durchsetzt das stiftförmige Befestigungselement 7 nur die Durchtrittsöffnung 6 im Halteschenkel 4. Das Befestigungselement 7 weist über seine Länge konstanten Durchmesser auf und ist im Bereich seiner beiden Stirnflächen flach ausgebildet. Die in Figur 2 gezeigte verformte, erweiterte Stirnflächenkontur erhält das Befestigungselement erst beim Durchschieben durch die Durchtrittsöffnungen 5 und 6 der Halteschenkel 3 und 4 und durch das Förderband 10 mittels nachfolgend noch näher zu beschreibender Dorne, die das stiftförmige Befestigungselement 7 beidendig verformen, wobei das in Durchschieberichtung vorlaufende Ende, somit das der Durchtrittsöffnung 5 zugeordnete Ende, zusätzlich geglättet wird.

Zur exakten Positionierung der Vielzahl von mit dem Förderband 10 zu verbindenden Verbindungselemente 1 sind diese mit einem Stab 14 verschweißt, der in Querrichtung des Förderbandes 10 verläuft.

Die Figuren 3 veranschaulichen die Vorrichtung zur Bildung der in den Figuren 1 und 2 gezeigten Verbindung sowie deren Wirkungsweise:

In einem Rahmen 15 der Vorrichtung mit im wesentlichen U-förmigen Querschnitt ist ein Oberwerkzeug 16 stationär gelagert. Es stützt sich an einem Schenkel 17 des Rahmens 15 ab. Im Bereich eines gegenüberliegenden Schenkels 18 des Rahmens 15 ist ein Verschiebeteil 19 im Rahmen 15 verschiebbar gelagert. Zwischen dem Verschiebeteil 19 und dem Oberwerkzeug 16 ist des weiteren ein Unterwerkzeug 20 vorgesehen, das gleichfalls im Rahmen 15 verschiebbar gelagert ist. Die Verschieberichtung von Verschiebeteil 19 und Unterwerkzeug 20 ist durch den Doppelpfeil A wiedergegeben.

Im Schenkel 18 des Rahmens 15 ist ein beidseitig beaufschlagbarer Hydraulikzylinder 21 angeordnet, mit einer Zuleitung 22 zum zylinderseitigen Druckraum 23 und einer Zuleitung 24 zum kolbenstangenseitigen Druckraum 25. Das freie Ende der Kolbenstange 44 des Hydraulikzylinders 21 ist mit dem Verschiebeteil 19 verbunden. Im Verschiebeteil 19 ist ein einseitig beaufschlagbarer Hydraulikzylinder 26 gelagert, dessen Zuleitung 27 zu seinem zylinderseitigen Druckraum 28 führt. Die Kolbenstange 29 des Hydraulikzylinders 26 liegt mit ihrem freien Ende auf der dem Oberwerkzeug 16 abgewandten Seite des Unterwerkzeuges 20 an. Eine Druckfeder 30 wirkt entgegen der Einfahrrichtung der Kolbenstange 29 auf den Kolben des Hydraulikzylinders 21. Versorgt wird die Druckleitung 27 des Hydraulikzylinders 21 über die Zuleitung 22 des Hydraulikzylinders 21 bei dessen Rückstellbewegung, wobei ein Teilstrom des Hydrauliköls vom Hydraulikzylinder 21 zur Zuleitung 27 geleitet wird und die Kolbenstange 29 des Hydraulikzylinders ausfährt. In der Zuleitung 27 ist ein Druckbegrenzungsventil 31 angeordnet, das den Maximaldruck im Hydraulikzylinder 26 um etwa die Hälfte bis ein Drittel des Maximaldruckes im Hydraulikzylinder 21 begrenzt, wobei der Hydraulikzylinder 21 eine wesentlich größere Kolbenfläche aufweist als der Hydraulikzylinder 26. Bei Erreichen bzw. Überschreiten des durch das Druckbegrenzungsventil 31 vorgegebenen Drucks in der Zuleitung 27 wird damit die Kolbenstange 29 des Hydraulikzylinders 26 bei konstanter Druckkraft eingeschoben.

Das Unterwerkzeug 20 ist mit einer Vielzahl von Bohrungen 32 versehen, die, bezogen auf die Zeichenebene gemäß der Figuren 3 bis 7, fluchtend hintereinander angeordnet sind und jeweils zur Aufnahme eines in diesen verschiebbaren Dornes 33 dienen. In der in Figur 3 gezeigten Ausgangsstellung ragt der jeweilige Dorn 33 in den zwischen dem Unterwerkzeug 20 und dem Verschiebeteil 19 gebildeten Spalt 34. In der Flucht der Längsmittelachse 35 des jeweiligen Dornes 33 ist das Oberwerkzeug mit einem konisch ausgeformten, fest mit dem Oberwerkzeug 16 verbundenen Dorn 36 versehen. Auch der verschiebbare Dorn 33 ist in der Flucht des Dornes 36, das heißt im Bereich seiner Längsmittelachse 35 mit einem konisch ausgeformten, erhabenen Ende 47 versehen. Die Kolbenstangen 29 und 44 der Hydraulikzylinder 26 und 21 sowie die Dorne 33 sind in Richtung des Doppelpfeiles A verschiebbar.

Zum Positionieren der in den Figuren 1 und 2 gezeigten Vielzahl von Verbindungselementen 1 und des Gurtendes 9 weist das Unterwerkzeug 20 auf seiner dem Oberwerkzeug 16 zugewandten Seite mehrere bezüglich der Zeichenebene fluchtend angeordnete Lageransätze 37 auf, auf die die Befestigungselemente 1, mit ihren Kupplungsösen 20, nach unten gerichtet, zur Anlage mit ihren Verbindungsstegen 8 legbar sind. Auch das Gurtende 9 wird mit seiner Stirnkante gegen die Lageransätze 37 zwischen die auseinandergebogenen Halteschenkel 3 und 4 des jeweiligen Verbindungselementes 1 eingeführt.

Zwischen dem Oberwerkzeug 16 und dem Unterwerkzeug 20 ist eine Druckleiste 38 angeordnet, die sich über den Bereich erstreckt, in dem das Förderband 10 mit den Verbindungselementen 1 zu versehen ist. Die Druckleiste 38 weist auf ihrer dem Unterwerkzeug 20 zugewandten Seite eine ebene, vertikal orientierte Druckleistenfläche 39 auf. Die Druckleiste 38 ist mittels eines Pneumatikzylinders 40 vertikal verfahrbar, wobei in der vollstandig angehobenen Stellung der Druckleiste 38 der zentrale Bereich der Druckleistenfläche 39 auf Höhe der Längsmittelachse 35 des Dornes 33 angeordnet ist. Die dem Oberwerkzeug 16 zugewandte, gleichfalls vertikal orientierte, ebene Rückfläche der Druckleiste 38 fluchtet mit der dem Unterwerkzeug 20 zugeordneten Kontur des Oberwerkzeuges 16, die durch Vorsprünge 42 am Oberwerkzeug gebildet sind. Diese ragen über den Dorn 36 hinaus und wirken ausschließlich mit den vertieften Verbindungsstegen 8 zwischen dem jeweiligen Verbindungselementpaar zusammen. Biegeansätze 45 am Oberwerkzeug 16 kontaktieren beim Zusammenbiegen der Verbindungselemente 1 den zwischen diesen angeordneten vertieften Verbindungssteg 8 und gestatten damit ein Abgleiten des jeweiligen Verbindungselementes 1 beim Zusammenbiegen am Oberwerkzeug 16. Zwischen dem Oberwerkzeug 16 und dem Unterwerkzeug 20 sind, bezogen auf die Zeichenebene, mehrere Druckfedern 43 fluchtend hintereinander angeordnet.

Mit dem Rahmen 15 ist ein Niederhalter 48 zum Andrücken des Gurtendes 9 an das Unterwerkzeug 20 vorgesehen. Der Niederhalter 48 weist einen im Rahmen 15 gelagerten Pneumatikzylinder 49 auf, dessen Kolben 50 beidseitig beaufschlagbar ist. Die in Richtung des Doppelpfeiles verfahrbare, mit dem Kolben 50 verbundene Kolbenstange 51 trägt im Bereich ihres freien Endes einen Stößel 52, dessen Klemmfläche parallel zur zugewandten Oberfläche des Gurtendes 9 bzw. der Gurtebene 11 angeordnet ist. Eine entsprechend angeordnete Anschlagplatte 53 ist mit dem Unterwerkzeug 20 verbunden, wobei die Klemmfläche dieser Platte 53 mit der Anlagefläche des Gurtendes 9 am Unterwerkzeug 20 fluchtet.

Nachfolgend wird die Wirkungsweise der Vorrichtung gemäß dem gezeigten Ausführungsbeispiel beschrieben:

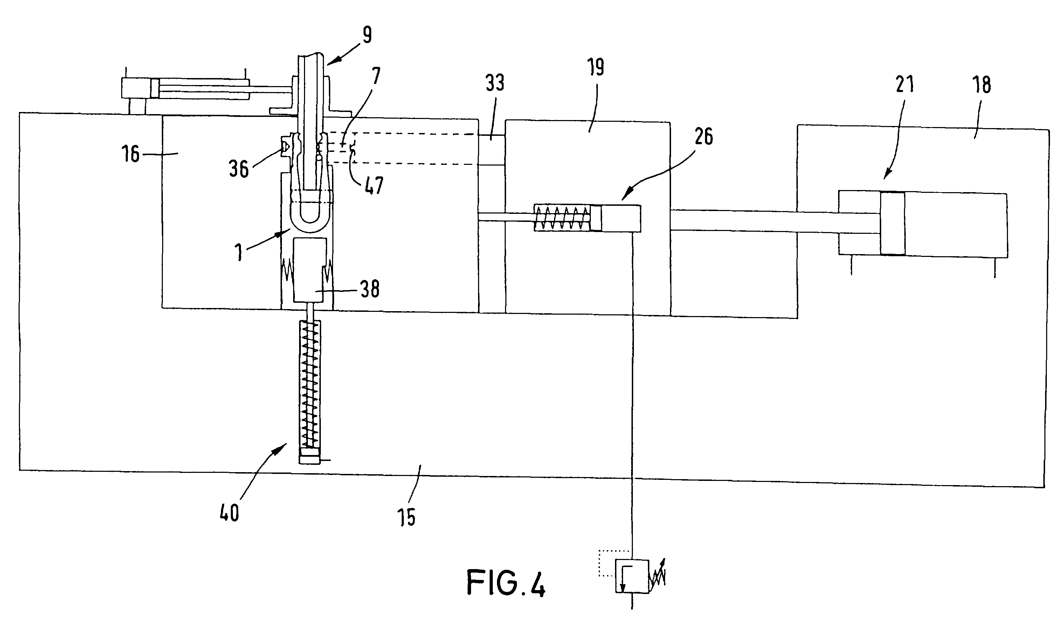

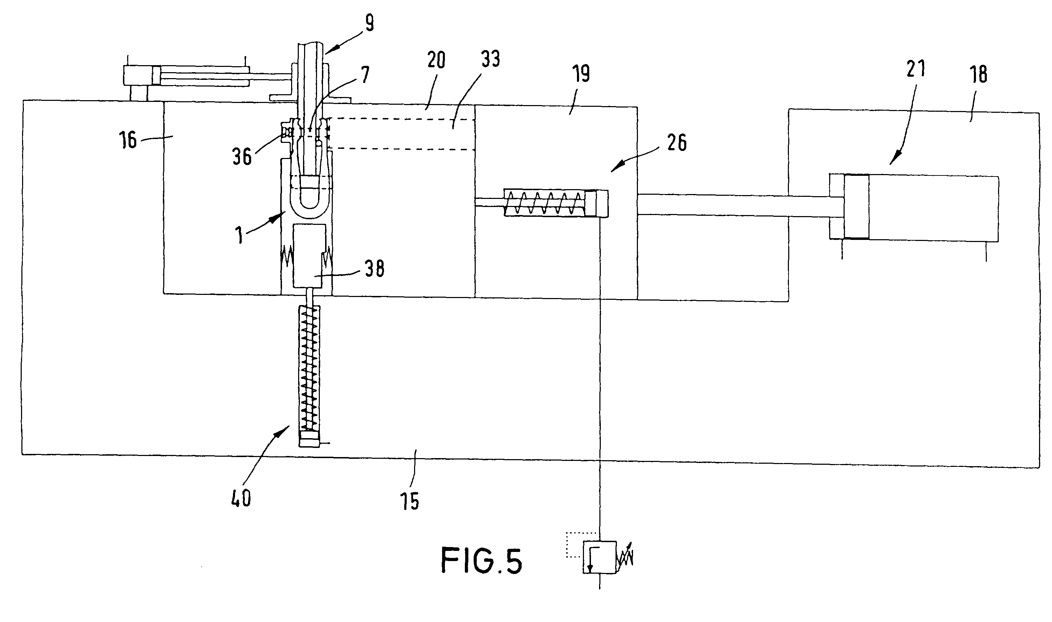

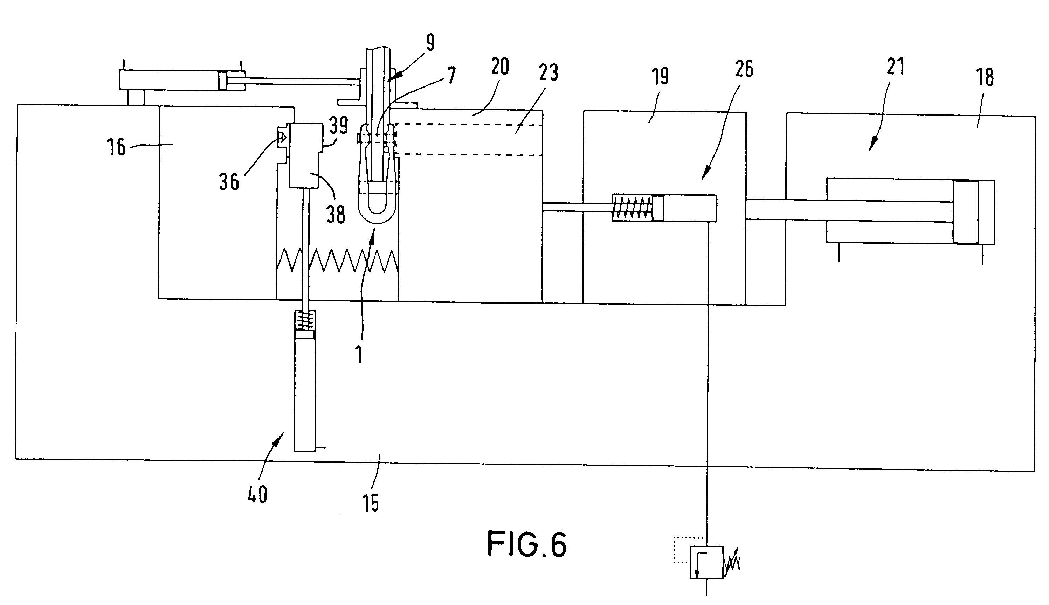

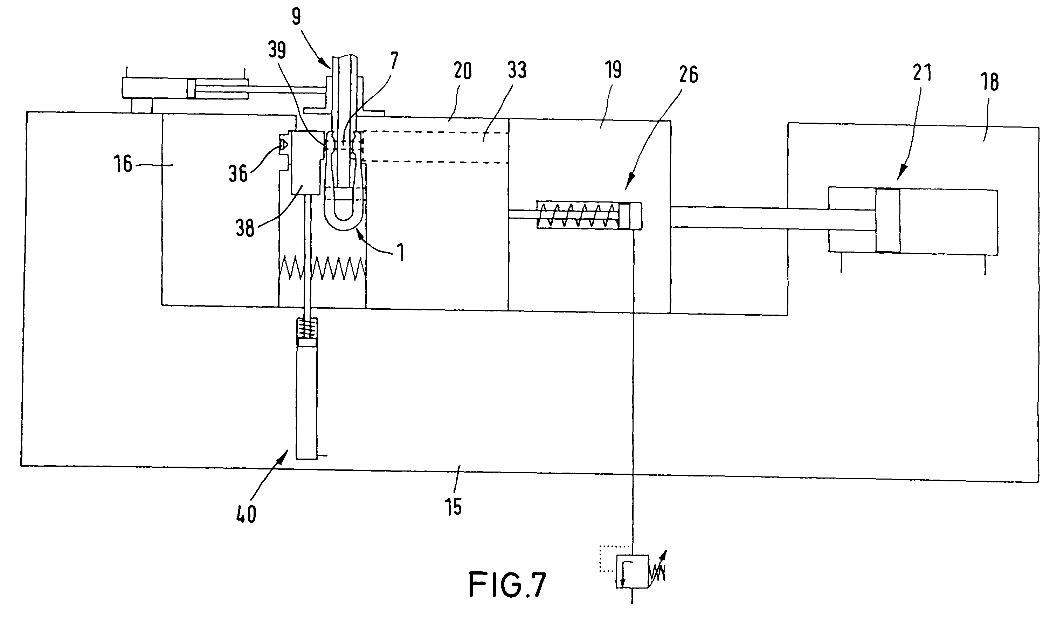

Im Ausgangszustand gemäß der Darstellung in Figur 3 ist die Klemmplatte 52 des Niederhalters 48 ausgefahren und rückt das Gurtende 9 gegen die unterwerkzeugseitige Klemmplatte 53, ferner sind das Oberwerkzeug 16 und das Unterwerkzeug 20 auseinandergefahren und es ist der Hydraulikzylinder 26 druckbeaufschlagt. Die Druckleiste 38 ist eingefahren. Auf die diversen Lageransätze 37 sind die Verbindungselemente 1 aufgelegt, die mittels des Stabes 14 zueinander fixiert sind und im Bereich des jeweiligen Halteschenkels 4 einen Befestigungsstift 7 aufnehmen. Das Gurtende 9 ist vertikal gegen die Lageransätze 7 geschoben und durchsetzt den Schenkelbereich der aufgebogenen Verbindungselemente 1. Hiervon ausgehend, wird das Hydrauliksystem des Hydraulikzylinders 21 beaufschlagt, womit die Kolbenstange 44 des Hydraulikzylinders 21 ausfährt und das Verschiebeteil 19 verschiebt. Die von dem Hydraulikzylinder 26 mittels der Kolbenstange 29 auf das Unterwerkzeug 20 übertragene Kraft ist dabei gleichbleibend. Dies deshalb, weil die im Druckraum 28 des Hydraulikzylinders 26 eingeschlossene Hydraulikflüssigkeit erst dann durch die Leitung 27 abfließen kann, wenn der im Druckbegrenzungsventil 31 eingestellte Druck erreicht bzw. überschritten ist. Das Verschiebeteil 19 verschiebt damit über die Kolbenstange 29 des Hydraulikzylinders 26 das Unterwerkzeug 20 in Richtung des Oberwerkzeuges 16 entgegen der Kraft der Federn 43 zwischen Ober- und Unterwerkzeug 16, 20. Die bisher geöffneten Verbindungselemente 1 gleiten entlang der Biegeansätze 45 und werden zusammengebogen, wie es in Figur 4 veranschaulicht ist. Die Stößel sind bis dahin nicht beaufschlagt worden. Beim weiteren Beaufschlagen des Hydraulikzylinders 21 bewegt dieser direkt über das Verschiebeteil 19 die Dorne 33, die damit die den Verbindungselementen 1 zugeordneten stiftförmigen Befestigungselemente 7 durch die Durchtrittsöffnungen 5 und 6 im jeweiligen Verbindungselement 1 und durch das Förderband 10 hindurchschieben. Diese Formflächen der Dorne 33 und 36 wirken auf die Enden der stiftförmigen Befestigungselemente 7 ein und verformen diese. Dieser Zustand ist in Figur 5 gezeigt. Anschließend wird der Hydraulikzylinder 21 im entgegengesetzten Sinne beaufschlagt, womit der Hydraulikzylinder 21 das Verschiebeteil 19 zurückzieht und über die Leitung 22 des Hydraulikzylinders 21 der Druckraum 28 des Hydraulikzylinders 26 erneut beaufschlagt wird. Die Federn 43 stellen sicher, daß das Oberwerkzeug 20 gegen die Kolbenstange 29 des Hydraulikzylinders 26 gedrückt bleibt. Die Dorne 33 verbleiben in ihrer vorgeschobenen Position. Es wird dann die Druckleiste 38 ausgefahren. Dieser Zustand ist in der Figur 6 gezeigt. Anschließend wird der Hydraulikzylinder 21 erneut aktiviert, wobei der stärkere Hydraulikzylinder 21 entgegen der Kraft des schwächeren Hydraulikzylinders 26 das Verschiebeteil 19 gegen das Unterwerkzeug 20 bewegt und eine Nachpressung der mit dem Förderband 10 verbundenen Verbindungselemente 1 herbeiführt. Dies geschieht, indem sich die Rückfläche 41 der Druckleiste 38 an den Vorsprüngen 42 des Oberwerkzeuges 16 abstützt und die Druckleiste 38 mit ihren Druckleistenflächen 39 das ausgeformte vorlaufende Ende des jeweiligen Befestigungselementes im Sinne einer weiteren Plättung nachverformt. Dieser Zustand ist in Figur 7 gezeigt. Anschließend wird der Hydraulikzylinder 21 wieder drucklos geschaltet und die Vorrichtung in ihrer Ausgangsstellung gemäß Figur 3 verfahren, in der das mit den Verbindungselementen versehene Gurtende entnommen werden kann.

Die pneumatische Ansteuerung des Niederhalters 48 ist so ausgelegt, daß beim vorgenannten Verfahren des Unterwerkzeuges 20 in Richtung des Oberwerkzeuges 16 die größere Kraft des Unterwerkzeuges 20 zu einem entsprechenden Einfahren der Kolbenstange 51 des Pneumatikzylinders 49 führt, und beim Verfahren des Unterwerkzeuges 20 vom Oberwerkzeug 16 weg, die Druckbeaufschlagung des Pneumatikzylinders 49 ein synchrones Ausfahren der Kolbenstange 51 bedingt, so daß das Gurtende 9 dauerhaft zwischen dem Stößel 52 und der Anschlagplatte 53 fixiert ist.

Erst dann, wenn die Verbindungselemente 1 am Gurtende 9 angebracht sind und auch die Glättung mittels der Druckleiste 38 stattgefunden hat, wird die Kolbenstange 51 des Niederhalters 48 eingefahren, so daß das Gurtende 9 mit den an diesem befestigten Verbindungselementen 1 aus der Vorrichtung entnommen werden kann.

## Patentansprüche

1. Vorrichtung zum Befestigen eines insbesondere U-förmigen Verbindungselementes (1) am Gurtende (9) eines Förderbandes (10) mittels eines stiftförmigen Befestigungselementes (7), das Durchtrittsöffnungen (5, 6) im Bereich der Schenkelenden des Verbindungselementes (1) und das Förderband (10) durchsetzt, mit einem Unterwerkzeug (20) und einem Oberwerkzeug (16), die zum Klemmen des Gurtendes zwischen den Schenkeln (3, 4) des Verbindungselementes (1) aufeinanderzu bewegbar, sowie voneinanderweg bewegbar sind, mit einem im Unterwerkzeug (20) verschiebbar gelagerten Dorn (33) zum Durchschieben des Befestigungselementes (7) durch die Durchtrittsöffnungen (5, 6) im Verbindungselement (1) und durch das Förderband (10), sowie einem im Oberwerkzeug (16) angeordneten Dorn (36), dessen dem Befestigungselement (7) zugewandtes Ende mit einer Kontur zum Ausformen des durch das Verbindungselement (1) geschobenen Befestigungselementendes (7) versehen ist, **dadurch gekennzeichnet,** daß eine Druckleiste (38) vorgesehen ist, die nach dem Ausformen der Kontur des Befestigungselementendes in Anlage mit dem Oberwerkzeug (16) und dem ausgeformten Ende des Befestigungselementes (7) bringbar ist.

2. Vorrichtung nach Anspruch 1, **dadurch gekennzeichnet,** daß die zur Anlage mit dem ausgeformten Ende des Befestigungselementes (7) gelangende Druckleistenfläche (49) eben ausgebildet ist.

3. Vorrichtung nach Anspruch 1 oder 2, **dadurch gekennzeichnet,** daß das Oberwerkzeug (16) stationär ist.

4. Vorrichtung nach Anspruch 3, **dadurch gekennzeichnet,** daß das Unterwerkzeug (20) horizontal zum Oberwerkzeug (16) verschiebbar ist, sowie die Druckleiste (38) vertikal zum Oberwerkzeug (16) verschiebbar ist.

5. Vorrichtung nach einem der Ansprüche 1 bis 4, **dadurch gekennzeichnet,** daß das Unterwerkzeug (20) der Aufnahme des Verbindungselementes (1) und des Befestigungselementes (7) dient.

6. Vorrichtung nach einem der Ansprüche 1 bis 5, **dadurch gekennzeichnet,** daß das Unterwerkzeug (20) einen Anschlag (37) zum Anlegen der Stirnfläche des Gurtendes (9) aufweist.

7. Vorrichtung nach einem der Ansprüche 1 bis 6, **dadurch gekennzeichnet,** daß der Dorn (33) des Unterwerkzeuges (20) mittels eines relativ zum Unterwerkzeug (20) bewegbaren Verschiebeteils (19) verschiebbar ist, wobei zwischen dem Verschiebeteil (19) und dem Unterwerkzeug (20) ein Kraftmittel (26) wirksam ist.

8. Vorrichtung nach Anspruch 7, **dadurch gekennzeichnet,** daß ein weiteres Kraftmittel (21) zum Verschieben des Verschiebeteiles (19) relativ zu einem Rahmen (15) der Vorrichtung zwischen dem Rahmen (15) und dem Verschiebete il (26) wirksam ist.

9. Vorrichtung nach Anspruch 7 oder 8, **dadurch gekennzeichnet,** daß das mit dem Unterwerkzeug (20) zusammenwirkende Kraftmittel (26) und/oder das mit dem Rahmen (15) zusammenwirkende Kraftmittel (21) als Hydraulikzylinder ausgebildet sind.

10. Vorrichtung nach Anspruch 9, **dadurch gekennzeichnet,** daß das mit dem Unterwerkzeug (20) zusammenwirkende Kraftmittel (26) als einseitig beaufschlagbarer Hydraulikzylinder ausgebildet ist, dessen Kolbenstange (29) sich am Unterwerkzeug (20) abstützt, sowie das mit dem Rahmen (15) zusammenwirkende Kraftmittel (21) als im Rahmen (15) angeordneter, beidseitig beaufschlagbarer Hydraulikyzlinder ausgebildet ist, dessen Kolbenstange (44) mit der Verschiebeteil (19) verbunden ist, wobei der eine relativ große Kolbenfläche aufweisende zylinderseitige Druckraum (25) des mit dem Rahmen (15) zusammenwirkenden Kraftmittels (21) über eine Druckleitung (24, 27) mit dem eine relativ kleine Kolbenfläche aufweisenden zylinderseitigen Druckraum (28) des mit dem Unterwerkzeug (20) zusammenwirkenden Kraftmittels (26) verbunden ist.

11. Vorrichtung nach Anspruch 10, **dadurch gekennzeichnet**, daß der Druckleitung (27) eine Druckbegrenzungseinrichtung (31) zugeordnet ist.

12. Vorrichtung nach einem der Ansprüche 1 bis 11, **dadurch gekennzeichnet**, daß zwischen dem Oberwerkzeug (16) und dem Unterwerkzeug (20) eine diese auseinanderdrückende Feder (43) angeordnet ist.

13. Vorrichtung nach einem der Ansprüche 10 bis 12, **dadurch gekennzeichnet**, daß sich die Kolbenstange (29) des mit dem Unterwerkzeug (20) zusammenwirkenden Kraftmittels (26) entgegen der Kraft einer Feder (30) am Unterwerkzeug (20) abstützt.

14. Vorrichtung nach einem der Ansprüche 1 bis 13, **dadurch gekennzeichnet**, daß die Druckleiste (38) mittels eines Pneumatikzylinders (40) verfahrbar ist.

15. Vorrichtung nach einem der Ansprüche 1 bis 14, **dadurch gekennzeichnet**, daß der im Unterwerkzeug (20) verschiebbar gelagerte Dorn (33) ein dem Befestigungselement (7) zugewandtes Ende mit einer Kontur (47) zum Ausformen des diesem zugewandten Befestigungselementendes aufweist.

16. Vorrichtung nach einem der Ansprüche 1 bis 15, **dadurch gekennzeichnet**, daß ein Niederhalter (48) zum Andrücken des Gurtendes (9) an das Unterwerkzeug (20) vorgesehen ist,

17. Vorrichtung nach Anspruch 16, **dadurch gekennzeichnet**, daß der Niederhalter (48) im Rahmen (15) oder dem Oberrahmen gelagert ist und einen relativ zu diesem verfahrbaren Stößel (52) aufweist.

18. Vorrichtung nach Anspruch 17, **dadurch gekennzeichnet,** daß der Niederhalter (48) einen Pneumatikzylinder (49) aufweist, dessen Kolbenstange (51) mit dem Stößel (52) versehen ist.

19. Vorrichtung nach einem der Ansprüche 16 bis 18, **dadurch gekennzeichnet,** daß das Unterwerkzeug (20) eine Anschlagplatte (53) aufweist, zwischen der und dem Niederhalter (48) das Gurtende (9) geklemmt wird.

## Claims

1. Apparatus for fastening a connecting element (1), especially a U-shaped connecting element (1), to the belt end (9) of a conveyor belt (10) by means of a pin shaped fastening element (7) which passes through through openings (5, 6) in the region of the limb ends of the connecting element (1) and through the conveyor belt (10), and having a lower tool (20) and an upper tool (16) which are displaceable towards each other for clamping the belt end between the limbs (3, 4) of the connecting element (1) and also displaceable away from each other, and having a mandrel (33) displaceably carried in the lower tool (20) for pushing the fastening element (7) through the through openings (5, 6) in the connecting element (1) and through the conveyor belt (10), and also having a mandrel (36) arranged in the upper tool (16) whose end facing the fastening element (7) is provided with a profile for shaping the fastening element end (7) that is pushed through the connecting element (1), characterised in that a pressure bar (38) is provided which, after shaping of the profile of the fastening element end, can be brought into abutment with the upper tool (16) and with the shaped end of the fastening element (7).

2. Apparatus according to claim 1, characterised in that the pressure bar surface (49) which comes into abutment with the shaped end of the fastening element (7), is configured planar.

3. Apparatus according to claim 1 or 2, characterised in that the upper tool (16) is static.

4. Apparatus according to claims 3, characterised in that the lower tool (20) is displaceable horizontally with respect to the upper tool (16), and the pressure bar (38) is displaceable vertically with respect to the upper tool (16).

5. Apparatus according to one of claims 1 to 4, characterised in that the lower tool (20) serves to receive the connecting element (1) and the fastening element (7).

6. Apparatus according to one of claims 1 to 5, characterised in that the lower tool (20) has a stop (37) for the end face of the belt end (9) to abut against.

7. Apparatus according to one of claims 1 to 6, characterised in that the mandrel (33) of the lower tool (20) is displaceable by means of a displacement member (19) itself displaceable with respect to the lower tool (20), a force producing means (26) acting between the displacement member (19) and the lower tool (20).

8. Apparatus according to claim 7, characterised in that a further force producing means (21) acts between a frame (15) of the apparatus and the displacement member (26) for displacing the displacement member (19) with respect to the frame (15).

9. Apparatus according to claim 7 or 8, characterised in that the force producing means (26) which co-operates with the lower tool (20), and/or the force producing means (21) which co-operates with the frame (15) is configured as a hydraulic cylinder.

10. Apparatus according to claim 9, characterised in that the force producing means (26) which co-operates with the lower tool (20) is configured as a single acting hydraulic cylinder whose piston rod (29) bears against the lower tool (20), and in that the force producing means (21) which co-operates with the frame (15) is configured as a double acting hydraulic cylinder arranged in the frame (15) whose piston rod (44) is connected to the displacement member (19), wherein the pressure chamber (25) of the force producing means (21) which co-operates with the frame (15), being a pressure chamber (25) on the cylinder side of relatively large piston surface, is connected via a pressure line (24, 27) with the pressure chamber (28) on the cylinder side of relatively small piston surface, being the pressure chamber (28) of the force producing means (26) which co-operates with the lower tool (20).

11. Apparatus according to claims 10, characterised in that the pressure line (27) has a pressure limiting device (31) associated with it.

12. Apparatus according to one of claims 1 to 11, characterised in that a spring (43) is arranged between the upper tool (16) and the lower tool (20) to press them apart.

13. Apparatus according to one of claims 10 to 12, characterised in that the piston rod (29) of the force producing means (26) which co-operates with the lower tool (20) bears against the lower tool (20) against the force of a spring (30).

14. Apparatus according to one of claims 1 to 13, characterised in that the pressure bar (38) is displaceable by means of a pneumatic cylinder (40).

15. Apparatus according to one of claims 1 to 14, characterised in that the mandrel (33) displaceably carried in the lower tool (20) has a profile (47) at its end facing the fastening element (7) for shaping the end of the fastening element that faces it.

16. Apparatus according to one of claims 1 to 15, characterised in that a hold down device (48) is provided for pressing the belt end (9) against the lower tool (20).

17. Apparatus according to claim 16, characterised in that the hold down device (48) is carried in the frame (15) or in the upper frame and has a pusher member (52) which is displaceable with respect thereto.

18. Apparatus according to claim 17, characterised in that the hold down device (48) has a pneumatic cylinder (49) whose piston rod (51) is provided with the pusher member (52).

19. Apparatus according to one of claims 16 to 18, characterised in that the lower tool (20) has a stop plate (53), the belt end (9) being clamped between the latter and the hold down device (48).

## Revendications

1. Dispositif pour fixer à l'extrémité (9) d'une bande transporteuse (10), un élément de liaison (1) notamment en forme de U, à l'aide d'un élément de fixation (7) en forme de broche qui traverse la bande transporteuse (10) des orifices de passage (5, 6) dans la zone des extrémités des branches de l'élément de liaison (1) et dispositif comprenant :
• un outil inférieur (20) et un outil supérieur (16) mobiles l'un vers l'autre pour serrer l'extrémité de la bande entre les branches (3, 4) de l'élément de liaison (1), et les outils pouvant s'écarter l'un de l'autre,
• une broche (33) montée coulissante dans l'outil inférieur (20) pour pousser l'élément de fixation (7) à travers les orifices de passage (5, 6) de l'élément de liaison (1) et à travers la bande transporteuse (10), ainsi qu'une broche (36) prévue dans l'outil supérieur (16) dont l'extrémité tournée vers l'élément de fixation (7) présente un contour pour mettre en forme l'extrémité de l'élément de fixation (7) qui a traversé l'élément de liaison (1),
caractérisé par
une barre de pression (38) qui, après le démoulage du contour de l'extrémité de l'élément de fixation, est mise en appui avec l'outil supérieur (16) et l'extrémité démoulée de l'élément de fixation (7).

2. Dispositif selon la revendication 1,
caractérisé en ce que
la surface (39) de la barre de pression qui arrive en appui avec l'extrémité mise en forme de l'élément de fixation (7) est plane.

3. Dispositif selon la revendication 1 ou 2,
caractérisé en ce que
l'outil supérieur (16) est fixe.

4. Dispositif selon la revendication 3,
caractérisé en ce que
l'outil inférieur (20) peut coulisser horizontalement par rapport à l'outil supérieur (16) et la barre de pression (38) peut coulisser verticalement par rapport à l'outil supérieur (16).

5. Dispositif selon l'une des revendications 1 à 4,
caractérisé en ce que
l'outil inférieur (20) reçoit l'élément de liaison (1) et l'élément de fixation (7).

6. Dispositif selon l'une des revendications 1 à 5,
caractérisé en ce que
l'outil inférieur (20) comporte une butée (37) pour recevoir la surface frontale de l'extrémité (9) de la bande.

7. Dispositif selon l'une des revendications 1 à 6,
caractérisé en ce que
la broche (33) de l'outil inférieur (20) peut coulisser avec une pièce coulissante (19) mobile par rapport à l'outil inférieur (20) et un actionneur (26) agit entre la pièce coulissante (19) et l'outil inférieur (20).

8. Dispositif selon la revendication 7,
caractérisé par
un autre actionneur (21) pour déplacer la pièce coulissante (19) par rapport à un châssis (15) du dispositif, en agissant entre le châssis (15) et la pièce coulissante (26).

9. Dispositif selon la revendication 7 ou 8,
caractérisé en ce que
l'actionneur (26) coopérant avec l'outil inférieur (20) et/ou l'actionneur (21) coopérant avec le châssis (15), sont des vérins hydrauliques.

10. Dispositif selon la revendication 9,
caractérisé en ce que
l'actionneur (26) coopérant avec l'outil inférieur (20) est un vérin hydraulique à simple effet dont la tige de piston (29) s'appuie contre l'outil inférieur (20) et l'actionneur (21) coopérant avec le châssis (15) est un vérin hydraulique à double effet monté dans le châssis (15) et dont la tige de piston (44) est reliée à la pièce coulissante (19), la chambre de pression (25) du côté du cylindre présentant une surface de piston relativement grande de l'actionneur (21) coopérant avec le châssis (15), est reliée par une conduite de pression (24, 27) à la chambre de pression (28) du côté du cylindre présentant une surface de piston relativement petite de l'actionneur (26) coopérant avec l'outil inférieur (20).

11. Dispositif selon la revendication 10,
caractérisé en ce que
la conduite de pression (27) comporte une installation de limitation de pression (31).

12. Dispositif selon l'une des revendications 1 à 11,
caractérisé par
un ressort d'expansion (43) monté entre l'outil supérieur (16) et l'outil inférieur (20).

13. Dispositif selon l'une des revendications 10 à 12,
caractérisé en ce que
la tige de piston (29) de l'actionneur (26) coopérant avec l'outil inférieur (20) s'appuie sur l'outil inférieur (20) contre la force d'un ressort (30).

14. Dispositif selon l'une des revendications 1 à 13,
caractérisé en ce que
la barre de pression (38) est déplacée par un vérin pneumatique (40).

15. Dispositif selon l'une des revendications 1 à 14,
caractérisé en ce que
la broche (33) coulissante dans l'outil inférieur (20) comporte une extrémité tournée vers l'élément de fixation (7) qui possède un contour (47) pour mettre en forme l'extrémité de l'élément de fixation tournée en regard de ce contour.

16. Dispositif selon l'une des revendications 1 à 15,
caractérisé en ce qu'
un organe d'enfoncement (48) est prévu pour presser l'extrémité (9) de la bande sur l'outil inférieur (20).

17. Dispositif selon la revendication 16,
caractérisé en ce qu'
un organe d'enfoncement (48) est monté dans le châssis (15) ou dans le châssis supérieur et présente un poussoir (52) mobile par rapport à celui-ci.

18. Dispositif selon la revendication 17,
caractérisé en ce que
l'organe d'enfoncement (48) comporte un vérin pneumatique (49) dont la tige de piston (51) est munie du poussoir (52).

19. Dispositif selon l'une des revendications 16 à 18,
caractérisé en ce que
l'outil inférieur (20) comporte une plaque de butée (53) et l'extrémité (9) de la bande se pince entre cette plaque et l'organe d'enfoncement (48).
